# EUROPEAN PATENT SPECIFICATION

(11) **EP 1 512 942 B1**
(45) Date of publication and mention of the grant of the patent: **18.05.2011**
(21) Application number: 04018969.8
(22) Date of filing: 10.08.2004
(51) Int. Cl.: G01C 21/26, G08G 1/09

(54) **Voice recognition device**
Spracherkennungsvorrichtung
Dispositif de reconnaissance de parole

(30) Priority: 03.09.2003 JP 2003311633
(43) Date of publication of application: 09.03.2005
(73) Proprietor: DENSO CORPORATION, Kariya-city, Aichi-pref. 448-8661 (JP)
(72) Inventor: Nomura, Tomoo, Kariya-city Aichi-pref., 448-8661 (JP)
(74) Representative: Winter, Brandl, Fürniss, Hübner, Röss, Kaiser, Polte - Partnerschaft

(56) References cited:
- EP-A- 0 827 126
- EP-A- 0 893 308
- EP-A- 1 001 627
- EP-A- 1 137 210

## Description

The present invention relates to a voice (or speech) recognition device that recognizes a voice broadcasted from a broadcast station.

As a distribution method of traffic information, a VICS (Vehicle Information Communication System) is known. However, the VICS is a service being still under development, so that a region of the service is limited to some cities or areas along arterial roads. Traffic information by a radio broadcast dedicated for traffic information that Public Roads Administration or the like broadcasts and traffic information by a private radio broadcast (traffic information being broadcasted between radio programs) are thereby still widely utilized.

Among them, with respect to the radio broadcast dedicated for traffic information, a driver needs to intentionally tune a reception frequency of a radio receiver to a broadcast frequency of the radio broadcast dedicated for traffic information, so that availability is not so acceptable. Further, even unrelated information (for example, information for an opposite direction in a highway) is broadcasted, so that the driver needs to listen to select necessary information from among traffic information broadcasted.

Further, with respect to the private radio broadcast, a primary program is the news program or entertainment program, so that the driver needs to listen to select traffic information from among the programs broadcasted. Furthermore, the driver needs to determine whether the selected information is traffic information necessary for the driver.

Thus, the distribution of the traffic information by the radio broadcast dedicated for traffic information and private radio broadcast does not enhance so much convenience for the driver. A road traffic information notice device described in Patent Document 1 is thereby known. The road traffic information notice device receives a radio broadcast to convert the voice of the radio broadcast received to language data by voice (or speech) recognition, then extracting necessary information for the own vehicle from the language data converted to notify the driver of the necessary information by voice (or speech) synthesis.

According to this road traffic information notice device, the driver can grasp the necessary information for the own vehicle without determining whether information broadcasted is necessary for the own vehicle by listening to the radio broadcast.
[Patent Document 1] JP 2000-222682 A

In recent years, a voice recognition technology has been remarkably developed, so that, irrespective of old or young, male or female, voices can be much accurately recognized to be converted to language data. However, a determination of whether the converted (or generated) language data (information) is really necessary for the own vehicle, requires complicated and skilled inference or objective thought, so that the present technology cannot easily execute the determination. Further, the private radio broadcast often has sentence forms being inconstant, so that it is specifically difficult to determine whether the converted language data is necessary or not. Consequently, direct utilization of the determination result into an important matter still has a problem (e.g., utilization into automatic detour route setting while traveling or automatic destination change or the like).

Document EP 0 893 308 A2 describes a device mounted in a vehicle allowing one or more of personified agent or imaginary living body to appear before a driver or passengers in the vehicle for communication therewith. A current status sensor detects predetermined vehicle current status data, and a memory stores study data in response to entry of the latest current status data. One of a plurality of communication programs stored in a program table may be selected in accordance with the current status data and/or the study data. An agent control unit controls activity of the agent in accordance with the selected communication program. The determined agent activity is output through a display and a speaker for communication with the driver.

Document EP 1 001 627 A1 describes a digital broadcasting system and terminal therefor, wherein the terminal device is equipped with a location judgment data base which stores setting data indicating the relationships between the location of the self device and the corresponding object to be presented to the user. On the basis of the location detection data obtained by detecting the location of the self device by receiving range signals transmitted by a plurality of GPS satellites and the setting data stored in the location judgment data base, corresponding objects are selected from a plurality of objects received and decoded and they are synthesized and presented as they are output to the display or the speaker.

It is an object of the present invention to provide a voice recognition device or the like enabling utilization, into an important matter, language data based on a broadcast transmitted from a broadcast station.

To achieve the above object, a voice recognition device provided with the following. A voice signal broadcasted is retrieved from a broadcast station. The voice signal retrieved is recognized and converted into language data. The language data converted is then stored. Here, in an extracting process, language data according with a given condition is extracted from among the language data stored; then, in a notifying process, information indicated by the language data extracted is notified so that validity or invalidity of the language data is determined based on a command by a user.

Here, "language data" means data, based on a voice signal, being quasi language that a person understands such as text data. Further, "a given condition" means a condition set for extracting necessary language data such as a condition for extracting information relating to traffic information, or a condition for extracting information relating to weather information. Furthermore, "to determine validity or invalidity" means, in detail, to attach a flag indicating validity to valid language data or to attach a flag indicating being invalid to invalid language data; otherwise, to delete the invalid language data.

Namely, according to a voice recognition device of the present invention, as the first stage, necessary language data is extracted based on the above-described given condition; then, as the second stage, a user is notified of information indicated by the language data extracted, and to judge its validity or invalidity. The validity or invalidity of the language data is thereby determined according to a judgment result by the user. Thus, in the second stage, the validity or invalidity of the language data is judged by the user, so that whether the language data is really necessary for the user is accurately determined. Further, the validity determination is applied not for the entire language data, but for the language data that are screened in the first stage and assumed to be relatively necessary. This decreases a user's load in comparison with the case where the user judges the entire language data.

The above and other objects, features, and advantages of the present invention will become more apparent from the following detailed description made with reference to the accompanying drawings. In the drawings:
FIG. 1 is a block diagram for explaining a schematic structure of a navigation device;
FIG. 2 is a block diagram for explaining an internal structure of a processing unit;
FIG. 3 is a flow chart diagram for explaining a receiving processing; and
FIG. 4 is a flow chart diagram for explaining a determining processing.

An embodiment that the present invention is directed to will be now explained with reference to the drawing. Here, the embodiment of the present invention is not limited to the examples to be described below, including various structures as long as the various structures are within a scope of the present invention.

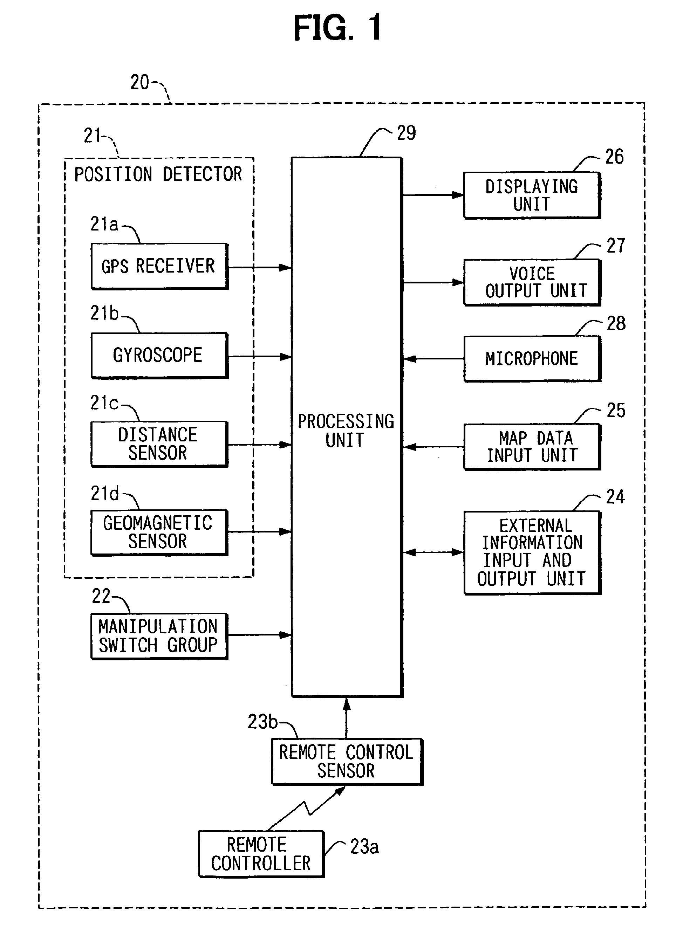

FIG. 1 is a block diagram for explaining a schematic structure of a navigation device 20 of an embodiment. The navigation device 20 is mounted on a vehicle and includes: a position detector 21 for detecting a current position of the vehicle; a manipulation switch (SW) group 22 for inputting various commands from a user; a remote controller 23a that is for inputting various commands similarly with the manipulation switch group 22 and is separated from the navigation device 20; an external information input and output unit 24 capable of inputting information obtained from devices other than the navigation device 20 and of outputting information to the other devices; a map data input unit 25 for inputting map data or the like obtained from an external storage medium that stores map data or various information; a displaying unit 26 for displaying a map or various information; a voice output unit 27 for outputting various guiding voices or the like; and a processing unit 29. The processing unit 29 is for executing various processing according to inputs from the above-described position detector 21, the manipulation switch group 22, the remote control sensor 23b, the external information input and output unit 24, and the map data input unit 25, and for controlling the external input and output unit 24, the displaying unit 26, and the voice output unit 27.

The position detector 21 includes: a GPS (Global Positioning System) receiver 21a for receiving transmitted radio waves from satellites for GPS via a GPS antenna to detect a current position, orientation, speed, etc. of the vehicle; a gyroscope 21b for detecting a magnitude of rotation movement applied on the vehicle; a distance sensor 21c for detecting a traveling distance from back and forth acceleration or the like of the vehicle; and a geomagnetic sensor 21d for detecting an advancing orientation from earth magnetism. These sensors or the like 21a to 21d cause their own errors due to different characteristics and are therefore configured to be used by a plurality of sensors that complement each other.

The manipulation switch group 22 is constructed of a touch panel integrated with the displaying unit 26 and disposed on a screen as a unit built in the displaying unit 26, a mechanical switch in the periphery of the displaying unit 26, and the like. The touch panel and displaying unit 26 are integrated by being laminated. The touch panel can be any one of various types such as a pressure-sensitive type, an electromagnetic induction type, an electric capacitance type, or a combination of the foregoing.

The external information input and output unit 25 is connected with other external devices or the like to take a role of a function to input and output information with the external devices. The external information input an output unit 25 is connected with an audio device (not shown) as one of the external devices and capable of receiving a voice signal of a radio, further outputting signals for controlling the audio device such as selecting channels, and turning on or off the power.

The map data input unit 25 is a device for receiving various data stored in the storage medium (not shown). The storage medium stores map data (road data, landform data, mark data, intersection data, entity data, etc.), voice data for guidance, voice recognition data, etc. The storage medium typically includes a CD-ROM and a DVD-ROM from the viewpoint of their data volumes; however, a magnetic storage unit such as a hard disk, or a medium such as a memory card can be included.

The displaying unit 26 is a color display device of any one of a liquid crystal display, organic electro luminescent (EL) display, a CRT, and the like. The screen of the displaying unit 26 shows a map with additional data of a mark of current position, a guiding route to a destination, names, landmarks, marks for various entities, using the current position of the vehicle detected by the position detector 21 and the map data inputted by the map data input unit 25. Further, guidance for the entities can be also shown.

The voice output unit 27 can output voice of the guidance for the entities and other guidance, which are inputted from the map data input unit 25. The microphone 28 outputs electric signals based on the voice inputted when the user utters the voice. The user can operate the navigation device 20 by inputting the various voices to the microphone 28.

The processing unit 29 is constructed mainly of a known microcomputer containing a CPU, a ROM, a RAM, an I/O, and a bus line connecting these components. The processing unit 29 executes various processing based on the program stored in the ROM or RAM. For example, in a displaying processing, a current position of the vehicle is computed as a set of coordinates and advancing orientation, based on detection signals from the position detector 21; and then a map or the like around the current position computed is read through the map data input unit 25 to be displayed. In a route guiding processing, an appropriate route to a destination is computed based on: the position data stored in the map data input unit 25; and destination being set according to manipulation of the manipulation switch group 22 or remote controller 23a.

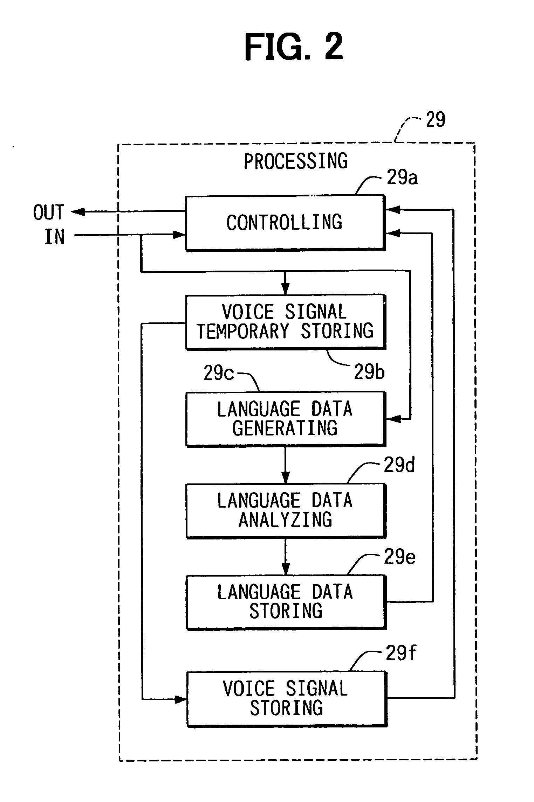

The internal structure of the processing unit 29 will be explained using a block diagram in FIG. 2. As shown in FIG. 2, the processing unit 29 includes a controlling unit 29a, a voice signal temporary storing unit 29b, a language data generating unit (language data converting unit) 29c, a language data analyzing unit 29d, a language data storing unit 29e, and a voice signal storing unit 29f.

The controlling unit 29a is inputted signals or the like from the position detector 21, the manipulation switch group 22, the remote control sensor 23b, the external information input and output unit 24, the map data input unit 25, or the like; further, the controlling unit 29a outputs signals or the like for controlling the external information input and output unit 24, the displaying unit 26, and the voice output unit 27. The controlling unit 29a controls, as a whole, the parts of the processing unit 29.

The voice signal temporary storing unit 29b can store the voice signals inputted for a given period (e.g., one minute). Here, the newest voice signal is constantly stored, while the oldest voice signal is deleted.

The language data generating unit 29c has a function of generating language data based on the voice signals inputted. The language data generated is sent one by one to the language data analyzing unit 29d. The language data analyzing unit 29d analyzes the language data sent from the language data generating unit 29c, sending, to the language data storing unit 29e, only necessary language data from among the analyzed language data.

The language data storing unit 29e stores the necessary language data sent from the language data analyzing unit 29d. The voice signal storing unit 29f stores the language data designated from among the voice signals stored in the voice signal temporary storing unit 29b.

### (1) Receiving processing

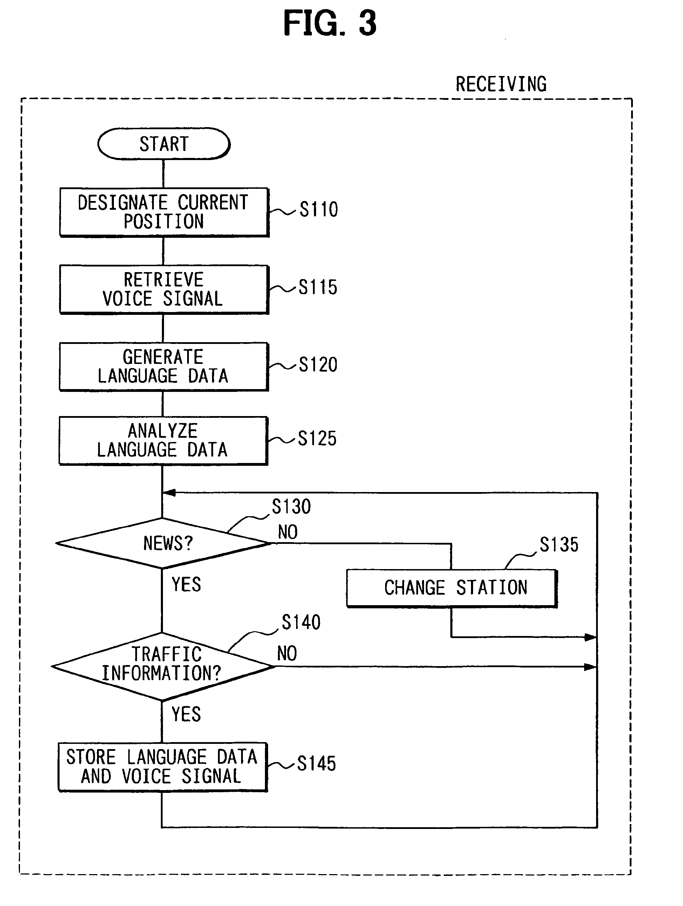

In the next place, the receiving processing executed by the processing unit 29 will be explained using the flow chart in FIG. 3. The receiving processing is started when the navigation device 20 is supplied with power. As the processing is started, the controlling unit 29a designates a current position based on a signal from the position detector 21 (S110). Retrieving a voice signal of the radio broadcast is then started, from the audio device via the external information input and output unit 24 (S115). The retrieved voice signal is stored in the voice signal temporary storing unit 29b. Further, the voice signal is also sent to the language data generating unit 29c; the language data generating unit 29c executes voice (or speech) recognition to generate the language data (S120). Here, "language data" means data being quasi language understood by a person such as text data; the audio device has a choice of causing a user to listen to the radio broadcast or not causing.

The language data generated by the language data generating unit 29c is sent to the language data analyzing unit 29d; thereby, the language data analyzing unit 29d analyzes the language data (S125). Here, "analyzing" means to determine a context from words or a word order. This analyzing is executed on every sentence, also being executed using the preceding and following sentences. Thus, each processing from S115 to S125 is started and executed one by one.

As each processing at S115 to S125 is started, the language data analyzing unit 29d determines whether or not the voice signal broadcasted from the broadcast station relates to the news, based on the analyzing result of the language data; further, the unit 29d determines whether broadcasted information not relating to the news continues for a given period (e.g., 3 minutes) (S130). The determination of whether the broadcasted information does not relate to the news, is executed by whether person's colloquial expressions are included (information relating to music is thereby removed), by whether more than the given number of terms used in the news are included, or the like. When the broadcasted information not relating to the news continues for the given period, the processing advances to S135; otherwise, to S140.

At S135, the controlling unit 29a outputs, to the audio device via the external information input and output unit 24, a command for changing a broadcast station to be received. The broadcast to be received is thereby changed; then, the voice signal from another broadcast station is newly received via the external input and output unit 24, which returns the processing to S130. Here, whether broadcasted information not relating to the news continues for the given period is determined again.

Meanwhile, at S140, the language data analyzing unit 29d determines whether the language data relates to traffic information. In detail, it is determined by whether terms relating to a traffic or terms relating to a place are included in the language data. When the language data does not relate to the traffic information, the processing returns to S130, where whether broadcasted information not relating to the news continues for the given period is determined again.

By contrast, when the language data relates to the traffic information (S140:YES), the language data is stored along with an ID for identifying in the language data storing unit 29e. Further, the voice signal corresponding to the language data is retrieved from the voice signal temporary storing unit 29b by the voice signal storing unit 29f; thereby, the voice signal storing unit 29f stores the voice signal while attaching the same ID as that used when the language data storing unit 29e stores the language data (S145). Accordingly, the language data stored in the language data storing unit 29e and voice signal stored in the voice signal storing unit 29f are managed by the same ID.

When the language data storing unit 29e and voice signal storing unit 29f complete storing procedures, the processing returns to S130, where whether broadcasted information not relating to the news for the given period is determined again.

Here, it is favorable that a broadcast station constantly broadcast a voice signal including desired contents; however, such a private radio broadcast does not always broadcast desired contents since the private radio broadcast includes various programs. Therefore, it is favorable that the broadcast station be changed when no language data extracted in the receiving process appears for a given period.

The operational example of the receiving processing will be shown below. It is supposed that, as a radio broadcast, "A rescue training took place, the training that assumes that an accident occurs at a five kilometer spot towards Tokyo from Nagoya interchange in Tomei (Tokyo-Nagoya) Expressway" is broadcasted. Here, as language data, "Tomeikousokudouro (Tomei Expressway)- nagoyainta (Nagoya interchange)- noborishasenno (lane directing to Tokyo)- tokyogawa (towards Tokyo)- gokirochitende (a spot of five kilometers)-jikoga (accident)- okitatosouteishita (assuming occurrence)- kyujyokunrenga (rescue training)- jissisaremashita (took place)" is generated and stored in the language data storing unit 29e. Further, as a voice signal, the voice read by an announcer indicating "A rescue training took place, the training that assumes that an accident occurs at a five kilometer spot towards Tokyo from Nagoya interchange in Tomei (Tokyo-Nagoya) Expressway" is directly stored in the voice signal storing unit 29f.

### (2) Determining processing

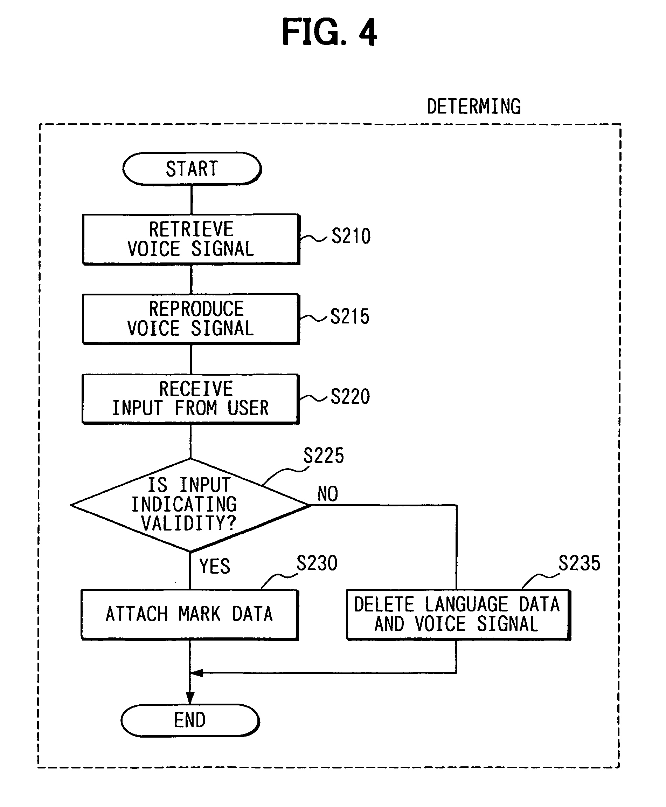

In the next place, the determining processing executed by the processing unit 29 will be explained using the flow chart in FIG. 4. The determining processing is started at some kind of timing before the language data stored in the language data storing unit 29e is to be utilized. This some kind of timing means a timing when the user executes given manipulation, when the language data storing unit 29e stores the language data, when the navigation device 20 approaches a position corresponding to the information include in the language data, or the like.

As the processing is started, the controlling unit 29a retrieves the voice signal corresponding to the ID from the voice signal storing unit 29f (S210). (When the user designates an ID, the ID designated is used for retrieving; at the timing when the language data storing unit 29e stores the language data, an ID that is attached at the described timing is used for retrieving.)

Next, the voice output unit 27 is caused to reproduce the voice signal retrieved (S215). Namely, the user can listen to what a radio broadcasted. The user determines whether the information reproduced can be used for route guidance, and intentionally inputs the determination that is to be received by the manipulation switch group 22 or remote control sensor 23b (S220). When the input received means "this information is to be used for route guidance," namely "information is valid," mark data (e.g., flag) indicating validity is attached to the language data, which is stored in the language data storing unit 29e and of which ID is the same as ID attached to the reproduced voice signal (S230). The determining processing is then terminated.

By contrast, when the input received means "this information is to be not used for route guidance," namely "information is invalid," the reproduced voice signal is deleted from the voice signal storing unit 29. Further, the language data of which ID is the same as ID attached to the reproduced voice signal is deleted from the language data storing unit 29e (S235). The determining processing is then terminated.

The operational example of the determining processing will be shown below. For example, it is supposed that the language data storing unit 29e stores the language data of "Tomeikousokudouro (Tomei Expressway)- nagoyainta (Nagoya interchange)- noborishasenno (lane directing to Tokyo)- tokyogawa (towards Tokyo)- gokirochitende (a spot of five kilometers)- jikoga (accident)-okitatosouteishita (assuming occurrence)- kyujyokunrenga (rescue training)-jissisaremashita (took place)." It is further supposed that a vehicle having the navigation device 20 approaches Nagoya interchange in Tomei Expressway. Here, a notice is shown in the displaying unit 26, the notice that information is unconfirmed by a user, based on the language data (having no mark data indicating validity). The user thereby manipulates to confirm the unconfirmed information, so that the above-described determining processing is started. In the determining processing, radio-broadcasted "A rescue training took place, the training that assumes that an accident occurs at a five kilometer spot towards Tokyo from Nagoya interchange in Tomei (Tokyo-Nagoya) Expressway" is reproduced; thereafter, the user inputs so as to determine whether the information is valid or not. Based on the input by the user, the navigation device 20 either attaches the mark data indicating validity to the language data, or deletes the language data and voice signal.

The language data determined to be valid in this determining processing is used for route change, warning, or the like. In the above example, the rescue training is assumed to take place without preventing the traffic, so that the relevant language data is determined to be invalid in the determining processing. This deletes the relevant language data and voice signal, so that they are not to be used for the route changing or warning.

Thus, according to the navigation device 20 of this embodiment, information only relating to traffic information is extracted from among information broadcasted from a broadcast station, then being confirmed by a user. Further, the information which is determined, by the user, to be necessary is to be used for other processing such as route guidance. Accordingly, accuracy of the information is enhanced; thereby, accuracy of other processing such as route guidance is naturally enhanced.

Other embodiments will be explained.
(1) The voice signal temporary storing unit 29b and voice signal storing unit 29f can be removed. Here, in the determining processing, instead of the voice signal, the language data can be read by a synthetic voice (speech). In this structure, a hardware resource can be deleted.
(2) In the determining processing, along with reproduction of the voice signal, the language data can be read by a synthetic voice. In this structure, the user can compare the information indicated by the language data with the contents of the voice notified based on the voice signal, so that the user can realize an error of the recognition when the language data is generated. Therefore, when the error of the recognition occurs, the user can take countermeasures such as correction or deletion of the language data, or the like. As a result, accuracy of the language data is enhanced, which enhances utility value of the language data.
(3) The functions of the voice recognition device are realized, in the above embodiment, by being built in the navigation device 20; however, it can be realized as the voice recognition device itself. Furthermore, the valid language data held by the voice recognition device can be retrieved and utilized by other devices (e.g., personal computer, navigation device).
(4) A program to function as the processing unit of the voice recognition device of the embodiment, can be executed by a computer built in a voice recognition device. In this structure, for example, the program is stored in a computer-readable medium such as a flexible disk, a magnetic optical disk, a CD-ROM, a hard disk, a ROM, a RAM, etc. By loading the program into a computer and activating the program as needed, the program functions as the voice recognition device. Further, the program can be distributed via a network, so that functions of the voice recognition device can be upgraded.

It will be obvious to those skilled in the art that various changes may be made in the above-described embodiments of the present invention. However, the scope of the present invention should be determined by the following claims.

## Claims

1. A voice recognition device (20) including:
a voice signal retrieving unit (24) that retrieves a voice signal;
a language data converting unit (29c) that recognizes the voice signal retrieved by the voice signal retrieving unit and converts the voice signal recognized into language data; and
a receiving unit (22, 23a) that receives a command from a user;
a notifying unit (26, 27) that notifies various information,
**characterized in that**
the voice signal is broadcasted from a broadcast station;
the voice recognition device further comprises:
a language data storing unit (29e) that stores the language data converted by the language data converting unit;
a controlling unit (29a) that executes an extracting process where language data according with a given condition is extracted from among the language data stored in the language data storing unit and a notifying process where the notifying unit is caused to notify information indicated by the language data extracted, further determining validity or invalidity of the language data used in the notifying process based on the command received by the receiving unit.

2. The voice recognition device of Claim 1, further comprising:
a voice signal storing unit (29b, 29f) that stores the voice signal retrieved by the voice signal retrieving unit,
wherein the controlling unit causes, in the notifying process, the notifying unit to notify, as a voice, the voice signal that is stored by the voice signal storing unit and corresponds to the language data extracted, instead of the information indicated by the language data extracted.

3. The voice recognition device of Claim 1, further comprising:
a voice signal storing unit (29b, 29f) that stores the voice signal retrieved by the voice signal retrieving unit,
wherein the controlling unit causes, in the notifying process, the notifying unit to notify, as a voice, the voice signal that is stored by the voice signal storing unit and corresponds to the language data extracted, along with the information indicated by the language data extracted.

4. The voice recognition device of any one of Claims 1 to 3, further comprising:
a current position information retrieving unit (21) that retrieves information for designating a current position of the voice recognition device,
wherein the language data relating to the current position designated based on information retrieved by the current position information retrieving unit is extracted in the extracting process executed by the controlling unit.

5. The voice recognition device of any one of Claims 1 to 4,
wherein the controlling unit causes the voice signal retrieving unit to change the broadcast station from which the voice signal retrieving unit retrieves the voice signal when no language data extracted in the extracting process appears for a given period.

6. A navigation device (20) for executing a route guidance, the navigation device including:
a voice signal retrieving unit (24) that retrieves a voice signal;
a language data converting unit (29c) that recognizes the voice signal retrieved by the voice signal retrieving unit and converts the voice signal recognized into language data;
a receiving unit (22, 23a) that receives a command from a user;
a notifying unit (26, 27) that notifies various information; and
a current position information retrieving unit (21) that retrieves information for designating a current position of the navigation device,
**characterized in that**
the voice signal is broadcasted from a broadcast station;
the navigation device further comprises:
a language data storing unit (29e) that stores the language data converted by the language data converting unit;
an extracting unit (29a, 29d) that extracts language data at least relating to the current position designated based on information retrieved by the current position information retrieving unit from among the language data stored in the language data storing unit;
a controlling unit (29a) that causes the notifying unit to notify, to the user, information indicated by the language data extracted by the extracting unit; and
a determining unit that determines validity or invalidity of the language data notified based on the command received by the receiving unit from the user,
wherein the route guidance is executed by using the language data whose validity is determined by the determining unit.

7. A voice recognition method, including steps:
retrieving (S115) a voice signal broadcasted from a broadcast station;
recognizing (S120) the voice signal retrieved;
converting (S120) the voice signal recognized into language data; and
extracting (S140) language data in accordance with a given condition from among the language data converted,
**characterized in that**
the voice signal is broadcasted from a broadcast station;
the voice recognition method further comprises the steps of:
notifying (S215) a user of information indicated by the language data extracted; and
determining (S225) validity or invalidity of the language data, based on a command from the user notified.

## Patentansprüche

1. Spracherkennungsvorrichtung (20), die enthält:
eine Sprachsignalholeinheit (24), die ein Sprachsignal holt;
eine Sprachdatenumwandlungseinheit (29c), die das Sprachsignal, das von der Sprachsignalholeinheit geholt wird, erkennt und das erkannte Sprachsignal in Sprachdaten umwandelt; und
eine Empfangseinheit (22, 23a), die einen Befehl von einem Nutzer empfängt;
eine Meldeeinheit (26, 27), die verschiedene Informationen meldet,
**dadurch gekennzeichnet, dass**
das Sprachsignal von einer Rundsendestation rundgesendet wird;
die Spracherkennungsvorrichtung außerdem aufweist:
eine Sprachdatenspeichereinheit (29e), die die Sprachdaten, die von der Sprachdatenumwandlungseinheit umgewandelt werden, speichert;
eine Steuereinheit (29a), die einen Extrahierungsprozess ausführt, bei dem Sprachdaten entsprechend einer gegebenen Bedingung aus den Sprachdaten, die in der Sprachdatenspeichereinheit gespeichert sind, extrahiert werden, und einen Meldeprozess ausführt, bei dem die Meldeeinheit veranlasst wird, Informationen, die durch die extrahierten Sprachdaten angegeben werden, zu melden, wobei außerdem die Gültigkeit oder Ungültigkeit der Sprachdaten, die in dem Meldeprozess verwendet werden, auf der Grundlage des Befehls, der von der Empfangseinheit empfangen wird, bestimmt wird.

2. Spracherkennungsvorrichtung nach Anspruch 1, die außerdem aufweist:
eine Sprachsignalspeichereinheit (29b, 29f), die das Sprachsignal, das von der Sprachsignalholeinheit geholt wird, speichert,
wobei die Steuereinheit in dem Meldeprozess bewirkt, dass die Meldeeinheit das Sprachsignal, das von der Sprachsignalspeichereinheit gespeichert wird und den extrahierten Sprachdaten entspricht, anstelle der Informationen, die durch die extrahierten Sprachdaten angegeben werden, als eine Sprache meldet.

3. Spracherkennungsvorrichtung nach Anspruch 1, die außerdem aufweist:
eine Sprachsignalspeichereinheit (29b, 29f), die das Sprachsignal, das von der Sprachsignalholeinheit geholt wird, speichert,
wobei die Steuereinheit in dem Meldeprozess bewirkt, dass die Meldeeinheit das Sprachsignal, das von der Sprachsignalspeichereinheit gespeichert wird und den extrahierten Sprachdaten entspricht, zusammen mit den Informationen, die durch die extrahierten Sprachdaten angegeben werden, als eine Sprache meldet.

4. Spracherkennungsvorrichtung nach einem der Ansprüche 1 bis 3, die außerdem aufweist:
eine Derzeitig-Positionsinformationsholeinheit (21), die Information zum Bestimmen einer derzeitigen Position der Spracherkennungsvorrichtung holt,
wobei die Sprachdaten, die die derzeitige Position, die auf der Grundlage von Informationen, die von der Derzeitig-Positionsinformationsholeinheit geholt werden, bestimmt wird, betreffen, in dem Extrahierungsprozess, der von der Steuereinheit ausgeführt wird, extrahiert werden.

5. Spracherkennungsvorrichtung nach einem der Ansprüche 1 bis 4,
wobei die Steuereinheit bewirkt, dass die Sprachsignalholeinheit die Rundsendestation, von der die Sprachsignalholeinheit das Sprachsignal holt, ändert, wenn keine Sprachdaten, die in dem Extrahierungsprozess extrahiert werden, während einer gegebenen Zeitdauer erscheinen.

6. Navigationsvorrichtung (20) zum Ausführen einer Routenführung, wobei die Navigationsvorrichtung enthält:
eine Sprachsignalholeinheit (24), die ein Sprachsignal holt;
eine Sprachdatenumwandlungseinheit (29c), die das Sprachsignal, das von der Sprachsignalholeinheit geholt wird, erkennt und das erkannte Sprachsignal in Sprachdaten umwandelt;
eine Empfangseinheit (22, 23a), die einen Befehl von einem Nutzer empfängt;
eine Meldeeinheit (26, 27), die verschiedene Informationen meldet; und
eine Derzeitig-Positionsinformationsholeinheit (21), die Informationen zum Bestimmen einer derzeitigen Position der Navigationsvorrichtung holt,
**dadurch gekennzeichnet, dass**
das Sprachsignal von einer Rundsendestation rundgesendet wird;
die Navigationsvorrichtung außerdem aufweist:
eine Sprachdatenspeichereinheit (29e), die die Sprachdaten, die von der Sprachdatenumwandlungseinheit umgewandelt werden, speichert;
eine Extrahierungseinheit (29a, 29d), die Sprachdaten, die zumindest die derzeitige Position, die auf der Grundlage von Informationen bestimmt wird, die von der Derzeitig-Positionsinformationsholeinheit geholt werden, betreffen, aus den Sprachdaten, die in der Sprachdatenspeichereinheit gespeichert sind, extrahiert;
eine Steuereinheit (29a), die bewirkt, dass die Meldeeinheit dem Nutzer Informationen, die durch die Sprachdaten, die von der Extrahierungseinheit extrahiert werden, angegeben werden, meldet; und
eine Bestimmungseinheit, die die Gültigkeit oder Ungültigkeit der gemeldeten Sprachdaten auf der Grundlage des Befehls, der durch die Empfangseinheit von dem Nutzer empfangen wird, bestimmt,
wobei die Routenführung unter Verwendung der Sprachdaten, deren Gültigkeit von der Bestimmungseinheit bestimmt wird, ausgeführt wird.

7. Spracherkennungsverfahren, das die folgenden Schritte enthält:
Holen (S115) eines Sprachsignals, das von einer Rundsendestation rundgesendet wird;
Erkennen (S120) des geholten Sprachsignals;
Umwandeln (S120) des erkannten Sprachsignals in Sprachdaten; und
Extrahieren (S140) der Sprachdaten aus den umgewandelten Sprachdaten entsprechend einer gegebenen Bedingung,
**dadurch gekennzeichnet, dass**
das Sprachsignal von einer Rundsendestation rundgesendet wird;
das Spracherkennungsverfahren außerdem die folgenden Schritte aufweist:
Melden (S215) von Informationen, die durch die extrahierten Sprachdaten angegeben werden, an einen Nutzer; und
Bestimmen (S225) der Gültigkeit oder Ungültigkeit der Sprachdaten auf der Grundlage eines Befehls von dem Nutzer, an den gemeldet wurde.

## Revendications

1. Dispositif de reconnaissance de la parole (20) comprenant :
une unité de récupération de signal vocal (24) qui récupère un signal vocal ;
une unité de conversion de données de langage (29c) qui reconnaît le signal vocal récupéré par l'unité de récupération de signal vocal et convertit le signal vocal reconnu en données de langage ; et
une unité réceptrice (22, 23a) qui reçoit une commande d'un utilisateur ;
une unité de notification (26, 27) qui notifie diverses informations,
**caractérisé en ce que**
le signal vocal est diffusé à partir d'une station de diffusion ;
le dispositif de reconnaissance de la parole comprend en outre :
une unité de stockage de données de langage (29e) qui stocke les données de langage converties par l'unité de conversion de données de langage ;
une unité de commande (29a) qui exécute un processus d'extraction dans lequel les données de langage en fonction d'une condition donnée sont extraites parmi les données de langage stockées dans l'unité de stockage de données de langage et un processus de notification dans lequel l'unité de notification est forcée à notifier des informations indiquées par les données de langage extraites, en déterminant en outre une validité ou une invalidité des données de langage utilisées dans le processus de notification sur la base de la commande reçue par l'unité réceptrice.

2. Dispositif de reconnaissance de la parole selon la revendication 1, comprenant en outre :
une unité de stockage de signal vocal (29b, 29f) qui stocke le signal vocal récupéré par l'unité de récupération de signal vocal,
dans lequel l'unité de commande, dans le processus de notification, force l'unité de notification à notifier, sous forme vocale, le signal vocal qui est stocké par l'unité de stockage de signal vocal et correspond aux données de langage extraites, à la place des informations indiquées par les données de langage extraites.

3. Dispositif de reconnaissance de la parole selon la revendication 1, comprenant en outre :
une unité de stockage de signal vocal (29b, 29f) qui stocke le signal vocal récupéré par l'unité de récupération de signal vocal,
dans lequel l'unité de commande, dans le processus de notification, force l'unité de notification à notifier, sous forme vocale, le signal vocal qui est stocké par l'unité de stockage de signal vocal et correspond aux données de langage extraites, conjointement aux informations indiquées par les données de langage extraites.

4. Dispositif de reconnaissance de la parole selon l'une quelconque des revendications 1 à 3, comprenant en outre :
une unité de récupération d'informations de position actuelle (21) qui récupère des informations pour désigner une position actuelle du dispositif de reconnaissance de la parole,
dans lequel les données de langage relatives à la position actuelle désignée sur la base d'informations récupérées par l'unité de récupération d'informations de position actuelle sont extraites dans le processus d'extraction exécuté par l'unité de commande.

5. Dispositif de reconnaissance de la parole selon l'une quelconque des revendications 1 à 4,
dans lequel l'unité de commande force l'unité de récupération de signal vocal à changer la station de diffusion à partir de laquelle l'unité de récupération de signal vocal récupère le signal vocal quand aucune donnée de langage extraite dans le processus d'extraction n'apparaît pendant une période donnée.

6. Dispositif de navigation (20) pour exécuter un guidage routier, le dispositif de navigation comprenant :
une unité de récupération de signal vocal (24) qui récupère un signal vocal ;
une unité de conversion de données de langage (29c) qui reconnaît le signal vocal récupéré par l'unité de récupération de signal vocal et convertit le signal vocal reconnu en données de langage ;
une unité réceptrice (22, 23a) qui reçoit une commande d'un utilisateur ;
une unité de notification (26, 27) qui notifie diverses informations ; et
une unité de récupération d'informations de position actuelle (21) qui récupère des informations pour désigner une position actuelle du dispositif de navigation,
**caractérisé en ce que**
le signal vocal est diffusé à partir d'une station de diffusion ;
le dispositif de navigation comprend en outre :
une unité de stockage de données de langage (29e) qui stocke les données de langage converties par l'unité de conversion de données de langage ;
une unité d'extraction (29a, 29d) qui extrait des données de langage au moins relatives à la position actuelle désignée sur la base d'informations récupérées par l'unité de récupération d'informations de position actuelle parmi les données de langage stockées dans l'unité de stockage de données de langage ;
une unité de commande (29a) qui force l'unité de notification à notifier, à l'utilisateur, des informations indiquées par les données de langage extraites par l'unité d'extraction ; et
une unité de détermination qui détermine une validité ou une invalidité des données de langage notifiées sur la base de la commande reçue par l'unité réceptrice en provenance de l'utilisateur,
dans lequel le guidage routier est exécuté en utilisant les données de langage dont la validité est déterminée par l'unité de détermination.

7. Procédé de reconnaissance de la parole comprenant les étapes suivantes :
la récupération (S115) d'un signal vocal diffusé à partir d'une station d'émission ;
la reconnaissance (S120) du signal vocal récupéré ;
la conversion (S120) du signal vocal reconnu en données de langage ; et
l'extraction (S140) de données de langage en fonction d'une condition donnée parmi les données de langage converties,
**caractérisé en ce que**
le signal vocal est diffusé à partir d'une station de diffusion ;
le procédé de reconnaissance de la parole comprend en outre les étapes suivantes :
la notification (S215) à un utilisateur d'informations indiquées par les données de langage extraites ; et
la détermination (S225) une validité ou une invalidité des données de langage sur la base d'une commande provenant de l'utilisateur recevant la notification.
